Europäisches Patentamt

European Patent Office

Office européen des brevets

(19)

(11) Veröffentlichungsnummer: **0 076 992**
**B1**

(12) # EUROPÄISCHE PATENTSCHRIFT

(45) Veröffentlichungstag der Patentschrift:
31.07.85

(51) Int. Cl.⁴: **C 08 F 220/04, C 11 D 3/37**

(21) Anmeldenummer: **82109130.3**

(22) Anmeldetag: **04.10.82**

(54) **Polymere organische Säuren, Verfahren zu ihrer Herstellung und ihre Verwendung in Wasch- und Reinigungsmitteln.**

(30) Priorität: **10.10.81 DE 3140383**

(43) Veröffentlichungstag der Anmeldung:
**20.04.83 Patentblatt 83/16**

(45) Bekanntmachung des Hinweises auf die Patenterteilung:
**31.07.85 Patentblatt 85/31**

(84) Benannte Vertragsstaaten:
**DE FR GB IT**

(56) Entgegenhaltungen:
**DE - A - 1 445 292**
**DE - A - 1 467 656**
**FR - A - 2 345 465**

(73) Patentinhaber: **BASF Aktiengesellschaft,
Carl-Bosch-Strasse 38, D-6700 Ludwigshafen (DE)**

(72) Erfinder: **Hambrecht, Juergen, Dr., Werderstrasse 30,
D-6900 Heidelberg (DE)**
Erfinder: **Hartmann, Heinrich, Dr., Weinheimer
Strasse 46, D-6703 Limburgerhof (DE)**
Erfinder: **Denzinger, Walter, Wormer Landstrasse 65,
D-6720 Speyer (DE)**
Erfinder: **Hettche, Albert, Dr., Kleiststrasse 12,
D-6717 Hessheim (DE)**
Erfinder: **Trieselt, Wolfgang, Dr., Alwin-Mittasch-Platz 1,
D-6700 Ludwigshafen (DE)**
Erfinder: **Schneider, Rolf, Dr., Feldbergstrasse 21,
D-6800 Mannheim 1 (DE)**

## Beschreibung

Die Erfindung betrifft polymere organische wasserlösliche Säuren (»Polysäuren«), die durch kontinuierliche Copolymerisation von ethylenisch ungesättigten Monocarbonsäuren mit gegebenenfalls Dicarbonsäuren bzw. deren Anhydriden sowie weiteren copolymerisierbaren Monomeren in Substanz hergestellt werden.

Die Erfindung betrifft ferner die Verwendung dieser kontinuierlich hergestellten Polysäuren als Gerüststoffsubstanzen und Inkrustationsinhibitoren in Wasch- und Reinigungsmitteln.

Polysäuren auf Basis von Polymaleinsäureanhydrid und entsprechenden Copolymeren sind vielfach beschrieben worden, und auch ihre Verwendung als Hilfsstoff in Waschmittelrezepturen ist bekannt.

In der DE-PS 540 101 werden Maleinsäureanhydrid-Copolymerisate mit unterschiedlichen Comonomeren, wie z. B. Styrol, $\alpha$-Methylstyrol, Cumaron und Vinylacetat, beschrieben. Die Herstellung erfolgt diskontinuierlich durch Masse- bzw. Lösungspolymerisation in Gegenwart von radikalbildenden Initiatoren. Über das Molekulargewicht der resultierenden Polymeren ist nichts bekannt, und auch über die Verwendung wird nichts Schlüssiges ausgesagt. Der Nachteil der nach diesem Verfahren erzeugten Polymerisate besteht darin, daß sie chemisch und physikalisch uneinheitlich aufgebaut sind. Wäßrige oder mit Laugen neutralisierte Lösungen dieser Polymerisate sind deshalb häufig inhomogen. Die beschriebenen Monomerzusammensetzungen sind zudem nicht geeignet, um den für Waschhilfsmittel, wie z. B. Inkrustationsinhibitoren, notwendigen Erfordernissen zu entsprechen.

Polymaleinsäureanhydrid-Copolymerisate mit geringen Anteilen von Comonomeren, wie Acrylsäure, Vinylacetat u. a., werden in der US-3 755 264 beschrieben. Die Polymerisation, die ebenfalls diskontinuierlich in Toluol und in Gegenwart von großen Mengen an Initiatoren durchgeführt wird, führt zu Polymeren mit Molekulargewichten von $3 \cdot 10^2$ bis $10^5$. Auch bei diesen Polymerisaten besteht der Nachteil darin, daß aufgrund der diskontinuierlichen Fahrweise physikalisch und chemisch uneinheitliche Copolymerisate entstehen. Dies gilt für Maleinsäureanhydrid-Copolymere in besonderem Maße, da die Copolymerisationsparameter bei einem Großteil von Monomeren sehr ungünstig liegen (s. Ullmanns Encyclopädie der technischen Chemie, Verlag Chemie, Weinheim, 4. Aufl., Bd. 19, S. 151 ff. (1980)). Die Copolymerisate besitzen deshalb sehr unterschiedliche MSA-Gehalte je nach Comonomeren. Ein weiterer Nachteil besteht schließlich darin, daß das bei der Herstellung eingesetzte Lösungsmittel nach der Polymerisation entfernt und wieder aufgearbeitet werden muß, und gerade beim Einsatz auf dem Waschmittelsektor störende Restlösungsmittel im Polymeren mühsam entfernt werden müssen.

In der US-3 837 481 werden schließlich Polysäuren beschrieben, die im wesentlichen aus Maleinsäureanhydrid und geringeren Anteilen Acrylsäure und weiteren Comonomeren, wie Vinylacetat, aufgebaut sind. Die Polymerisation erfolgt ebenfalls diskontinuierlich. Das Reaktionsmedium ist Wasser, als Initiator wird Kaliumpersulfat eingesetzt. Die resultierenden Molekulargewichte liegen zwischen $5 \cdot 10^2$ und $3 \cdot 10^4$. Als Einsatzgebiete werden Detergentien u. a. in der Waschmittelindustrie angegeben. Der Hauptnachteil dieser Polysäuren besteht darin, daß bei der Polymerisation Maleinsäureanhydrid zur Maleinsäure hydrolysiert wird und dadurch die Copolymerisationsparameter nochmals ungünstiger werden (vgl. Ullmanns Encyclopädie der technischen Chemie, Verlag Chemie, Weinheim, 4. Aufl., Bd. 19, S. 151 f. (1980)). Die resultierenden Polymerisate sind dementsprechend chemisch und physikalisch sehr uneinheitlich, was sich nicht zuletzt auf die Wirksamkeit daraus hergestellter Waschmittelkombinationen auswirkt.

Bei den genannten Polymerisaten nach den Herstellverfahren gemäß den genannten Publikationen stellte sich zusätzlich heraus, daß die Produkte in schlechter Ausbeute und schlechter Reinheit anfielen. Dies gilt vor allem für die in der US-PS 3 755 264 beschriebene Verfahrensvariante. Hier ergab die Nachprüfung, daß als Hauptprodukt auch nach der Polymerisation und der Hydrolyse monomere Maleinsäure vorlag. In einem in »Chemiker-Zeitung« 95, Seiten 550 und 551, veröffentlichten Artikel von Berth wird neben anderen Polyelektrolyten auch Polymaleinsäure erwähnt (Tabelle, Seite 550 unten), und diese wird dort von dem erwähnten Autor wie auch die anderen Polyelektrolyte dahingehend beurteilt, daß die Waschkraft solche Substanzen enthaltender Mittel gegenüber phosphathaltigen Waschmitteln sehr stark abfällt.

Aufgrund des bisherigen Standes der Technik ergaben sich die wesentlichen Ziele, die der vorliegenden Erfindung zugrunde lagen.

Das eine Ziel bestand darin, ein einfaches, möglichst einstufiges Verfahren zur Herstellung von Polysäuren zu entwickeln, das gute Ausbeuten und reine Endprodukte garantiert, und das andere, mit einem solchen Verfahren Produkte zu finden, die auf dem Waschmittelgebiet bessere Eigenschaften aufweisen, d. h. sie sollten neben einem guten Calciumbindevermögen, das ja nur eine von mehreren Anforderungen an Gerüststoffsubstanzen darstellt, auch das durch das Weglassen von Phosphaten bedingte Inkrustierungsproblem einer Lösung näherbringen. Schließlich sollten solche Produkte auch eine brauchbare Weißwaschwirkung, die der von Phosphaten gleichkommt, zeigen, und schließlich sollten die Polysäuren chemisch und physikalisch sehr einheitlich aufgebaut sein und keinen Chargenschwankungen unterliegen.

Diese Ziele werden erfindungsgemäß durch eine radikalisch initiierte kontinuierliche Substanzpolymerisation, wie sie in den Patentansprüchen 1 bis 3, und mit Produkten erreicht, wie sie im Patentanspruch 4 definiert sind.

Es hat sich herausgestellt, daß die erfindungsgemäß aufgebauten und nach dem erfindungsgemäßen Verfahren hergestellten Polysäuren K-Werte zwischen 18 und 33 aufweisen, bestimmt nach DIN 53 726 in 2%igen Lösungen in Dimethylformamid, chemisch und physikalisch sehr einheitlich aufgebaut sind und überraschenderweise in phosphatarmen Waschmitteln als ausgezeichnete Inkrustierungsinhibitoren und Gerüststoffsubstanzen mit gleichzeitig gutem Calciumbindevermögen und guter Waschmittelwirkung wirksam sind. Sie weisen also wichtige Merkmale auf, die man bisher nur bei Phosphaten kannte.

Als monofunktionelle organische Säuren der Monomergruppe a) kommen solche mit 3 bis 10 C-Atomen, vorzugsweise Acrylsäure, Methacrylsäure, Crotonsäure, Vinylmilchsäure, Vinylsulfon- und Vinylphosphonsäure in Betracht. Besonders bevorzugt sind Acrylsäure und Methacrylsäure. Die Monomeren der Gruppe a) können für sich allein oder im Gemisch miteinander eingesetzt werden. Beispiele in Mischungen sind Acrylsäure und Methacrylsäure oder Acrylsäure und Vinylphosphonsäure. Die Monomeren der Gruppe a) sind zu 50 bis 95 Gewichts-%, vorzugsweise 60 bis 85 Gewichts-%, am Aufbau der Polymerisate betätigt. Der Anteil an Monomeren in der Monomerenmischung entspricht dabei dem Gehalt der Monomereinheiten im Copolymerisat. Die vor- und nachstehenden Prozentangaben beziehen sich auf die Summen aller Monomeren bzw. Monomereinheiten.

Als copolymerisierbare Monomeren der Gruppe b) werden alle mit den Monomeren der Gruppe a) und gegebenenfalls c) copolymerisierbaren Monomeren eingesetzt. Beispiele sind Styrol, $\alpha$-Methylstyrol, Ester der Acrylsäure oder Methacrylsäure mit ein- oder mehrwertigen Alkoholen, vorzugsweise mit einwertigen $C_1$- bis $C_{10}$-Alkanolen, Halb- und Diester der Maleinsäure mit $C_1$- bis $C_{10}$-Alkoholen, $\alpha$-Olefine, wie Diisobuten, Dodecen, Octadecen, sodann Allylalkohol, Vinylacetat, Vinylalkylether oder Vinylpyrrolidon. Besonders bevorzugte Monomere der Gruppe b) sind Vinylacetat, n-Butylacrylat, 2-Ethylhexylacrylat, Hydroxypropylacrylat, Styrol, N-Vinylpyrrolidon und Vinyl-iso-butylether.

Monomere der Komponente b) sind in Mengen von 0,5 bis 5 Gew.-%, vorzugsweise 1 bis 5 Gew.-%, im Polymerisat enthalten.

Als Monomere der Gruppe c) werden Maleinsäureanhydrid, Maleinsäure, Fumarsäure und Itakonsäure eingesetzt. Besonders bevorzugt ist der Einsatz von Maleinsäureanhydrid, da dadurch die Copolymerisation erleichtert wird. Die Monomeren der Gruppe c) sind zu 0 bis 49 Gew.-%; vorzugsweise zu 10 bis 40 Gew.-%, im Polymerisat enthalten.

Als Radikalinitiatoren werden organische Peroxide und Azoverbindungen verwendet, die der jeweils geforderten Polymerisationstemperatur bezüglich ihrer Zerfallcharakteristik angepaßt sind. Beispiele sind Dialkylperoxide, wie Di-tert.-butylperoxid, Dicumylperoxid, Monoalkylhydroperoxide wie tert.-Butylhydroperoxid, Persäureester wie tert.-Butylperoctoat, tert.-Butylperpivalat, tert.-Butylperacetat, tert.-Butylperbenzoat, Diesterperoxide wie tert.-Butylperoctoat, tert.-Butylperpivalat, tert.-Butylperacetat, tert.-Butylperbenzoat, Peroxide wie Lauroylperoxid, Benzoylperoxid, Percarbonate, wie tert.-Butylperoxiisopropylcarbonat, sowie Azoverbindungen, wie Azobisisobutyronitril. Besonders bevorzugt sind tert.-Butylperoctoat, tert.-Butylperbenzoat und Di-tert.-Butylperoxid sowie Azobisisobutyronitril. Sie werden in Mengen von 0,1 bis 5 Gew.-%, vorzugsweise 0,3 bis 1 Gew.-%, bei der Polymerisation verwendet.

Zu dem für die Herstellung der erfindungsgemäßen Copolymerisate erforderlichen kontinuierlichen Polymerisationsverfahren ist folgendes auszuführen:

Als Polymerisationsapparatur kann z. B. ein Druckkessel, eine Druckkesselkaskade, ein Druckrohr oder auch ein Druckkessel mit einem nachgeschalteten Reaktionsrohr, das mit einem statischen Mischer versehen ist, verwendet werden. Vorzugsweise polymerisiert man die Monomeren (a), (b) und gegebenenfalls (c) in mindestens zwei hintereinandergeschalteten Polymerisationszonen. Dabei kann die eine Reaktionszone aus einem druckdichten Kessel, die andere aus einem druckdichten Reaktionsrohr, vorzugsweise einem beheizbaren statischen Mischer bestehen. Wenn man die Polymerisation in zwei hintereinandergeschalteten Zonen durchführt, erhält man Umsätze, die oberhalb 99% liegen. Während der Polymerisation muß für eine gute Durchmischung der Komponenten gesorgt weden, beispielsweise verwendet man druckdichte Kessel, die mit einem Rührer ausgestattet sind, oder Polymerisationsrohre mit statischen Mischern.

Die Copolymerisation wird kontinuierlich durchgeführt. Ein Copolymerisat aus Acrylsäure, Maleinsäureanhydrid und n-Butylacrylat kann beispielsweise dadurch hergestellt werden, daß man die Monomeren einem Reaktor oder zwei hintereinandergeschalteten Polymerisationszonen, beispielsweise einer Druckkesselkaskade, kontinuierlich zuführt und nach einer Verweilzeit von 2 bis 60, vorzugsweise 5 bis 30 Minuten, bei Temperaturen zwischen 200 und 400°C, vorzugsweise 280 und 400°C, kontinuierlich aus der Reaktionszone ausschleust. Die Einhaltung dieser Temperaturgrenzen ist wichtig, da bei Unterschreiten die Verweilzeiten zu lang und die Molgewichte zu hoch werden, während bei Überschreitung thermische Zersetzungsprozesse eintreten können. Die Raum-Zeit-Ausbeuten liegen im allgemeinen zwischen 1 und 50 kg Polymerisat pro Liter und Stunde.

Die Polymerisation wird bei erhöhten Drücken von > 1 bar, vorzugsweise zwischen 1 und 200 bar, durchgeführt. Besonders gute Ergebnisse erhält man, wenn man die Polymerisationsreaktion bei periodischen Druckschwankungen mit Druckdifferenzen zwischen 5 und 120 bar durchführt und anschließend ebenfalls bei periodischen Druckschwankungen mit denselben Druckdifferenzen entspannt. Diese Maßnahme, die eine pulsierende Strömung des Reaktionsguts zur Folge hat, bewirkt eine Selbstreinigung des Reaktors und verhindert produktschädigende Wandbeläge und Anbackungen im Reaktor. Der Produktaustrag ist homogen und enthält keine Stippen oder gecracktes Material.

Der Feststoffgehalt der nach dem kontinuierlichen Verfahren hergestellten Polymerisate liegt über 99%, in bevorzugten Ausführungsformen über 99,5%. Zur Entfernung der restlichen flüchtigen Anteile — in der Regel handelt es sich um nicht umgesetzte Monomere — kann das Polymerisat auch im Vakuum entgast werden. Hierzu werden bekannte Verdampfungsaggregate, wie Rohrverdampfer, Plattenverdampfer oder Filmextruder eingesetzt. In der Regel ist ein solcher Entgasungsschritt für die Herstellung der erfindungsgemäßen Polymerisate jedoch nicht notwendig.

Das Copolymerisat kann aus der Polymerisationsapparatur kontinuierlich z. B. über ein Entspannungsgefäß mit nachgeschaltetem Austragsaggregat oder vorzugsweise pulsierend ausgetragen werden. Für viele Anwendungen ist es zweckmäßig, das Copolymerisat in hydrolysierter, neutralisierter bzw. teilneutralisierter Form einzusetzen. Die Carboxylgruppen des Copolymerisates werden daher in diesen Fällen im Anschluß an die Polymerisation in $H_2O$ gelöst bzw. mit Basen zu 50 bis 100% neutralisiert. Geeignete Basen sind beispielsweise gasförmiges Ammoniak, wäßrige Ammoniaklösungen oder wäßrige Lösungen anderer Basen, wie NaOH, KOH, Erdalkalihydroxide, wie $Mg(OH)_2$ oder $Ca(OH)_2$, Amine, wie Tri-$C_1$-bis -$C_4$-alkylamine, Hydroxyalkylamin, wie Mono-, Di- oder Triethanol- oder -isopropanolamin sowie Mischungen solcher Amine.

Bei der Hydrolyse bzw. Neutralisation wird in der Regel so verfahren, daß Copolymerisatlösungen hergestellt werden, die einen Feststoffgehalt zwischen 20 und 50 Gew.-% aufweisen. Die wäßrigen, teil- oder vollständig neutralisierten Copolymerisatlösungen können durch Zugabe von Wasser leicht weiter verdünnt werden.

Die Hydrolyse bzw. Neutralisation der Copolymerisate kann jedoch auch direkt im Anschluß an die Copolymerisation kontinuierlich durchgeführt werden. Die aus dem Reaktor kommende heiße Polymerisatschmelze wird dann bei Temperaturen von 80 bis 200°C, Drücken oberhalb 1 bar, Verweilzeiten von 10 bis 90 Minuten kontinuierlich mit Wasser bzw. den genannten Basen umgesetzt. Als Apparaturen für Hydrolyse und Neutralisation können z. B. Druckkessel, Druckrohre, die gegebenenfalls Mischorgane eingebaut enthalten oder auch Kombinationen von Druckkesseln und Druckrohren verwendet werden. Vorzugsweise werden Kombinationen von Druckrohren benutzt, die mindestens teilweise mit Mischorganen ausgestattet sind. Diese Organe können Stäbe und Siebplatten sein. Vorzugsweise verwendet man solche Mischorgane, die die Reaktionsmasse bei möglichst geringem Strömungswiderstand in verschiedene Ströme zerteilen und unter Veränderung der Strömungsrichtung wieder zusammenführen. Beispiele für solche Mischelemente sind statische Mischer.

Die erfindungsgemäßen Polysäuren sowie ihre wäßrige bzw. neutralisierten Lösungen wirken als ausgezeichnete Inkrustierungsinhibitoren. Ihre Wirkung ist in manchen Fällen so gut, daß sie sogar geringere Aschegehalte bei gewaschenen Geweben erbringen, als Phosphate, wie Pentanatriumtriphosphat, die in den bisherigen Waschmitteln zu 40 Gewichtsprozent und mehr enthalten sind.

Weiter hat sich gezeigt, daß die erfindungsgemäßen Polysäuren ein hohes Calciumbindevermögen und eine brauchbare Weißwaschwirkung zeigen, d. h. sie wirken auch als typische Gerüststoffsubstanzen.

Die erfindungsgemäßen Polysäuren bzw. ihre Salze können je nach Anwendungszweck den Waschmitteln in verschiedenen Mengen zugesetzt werden. Als Inkrustierungsinhibitoren liegen sie im allgemeinen — bezogen auf feste Anteile — zu 1 bis 6 Gewichtsprozent, vorzugsweise 0,5 bis 5 Gewichtsprozent, vor. Als Phosphatsubstitute können sie zu bis zu 40 Gewichtsprozent vorliegen.

Die nun folgenden Beispiele erläutern Herstellung und Verwendung der erfindungsgemäß herzustellenden Produkte. Die in den Beispielen angegebenen Teile sind Gewichtsteile, die Prozentangaben beziehen sich auf das Gewicht der Stoffe. Die K-Werte wurden 2%ig in DMF bestimmt (DIN 53 726).

Beispiele

Herstellung der Polysäuren der Beispiele 1—6

Die in Tabelle 1 angegebenen Mengen Acrylsäure, Maleinsäureanhydrid und n-Butylacrylat, Methylacrylat bzw. Vinylacetat oder tert.-Butylvinylether werden zusammen mit tert.-Butylperbenzoat in einen Druckkessel (Rauminhalt: 1000 Teile) mit nachgeschaltetem Druckrohr doppelten Rauminhalts mittels eines Druckreglers kontinuierlich zudosiert. Das System wurde auf 285°C erhitzt. Der Druck wurde im Bereich zwischen 5 und 50 bar gehalten und einmal innerhalb einer Minute durch eine periodische Druckregelung in diesem Bereich variiert. Die Verweilzeit betrug 10 bis 30 Minuten; die Copolymerschmelze wurde mengenmäßig in dem Maße ausgefahren, wie frische Monomerenmischung zugefahren wurde. Die Copolymerisate hatten die in Tabelle 1 angegebenen K-Werte.

Tabelle 1

| Beispiel | Einsatzstoffe (Gew.-Teile) | | | Initiator (Gew.-Teile) | K-Wert |
|----------|-----|-----|-----|---------|--------|
| | a) | b) | c) | | |
| 1 | 70 As | 28 MSA | 2 BA | 0,5 TBPB | 27 |
| 2 | 60 As | 36 MSA | 4 BA | 0,5 TBPB | 32 |
| 3 | 80 As | 18 MSA | 2 MA | 0,5 TBPB | 33 |
| 4 | 50 As | 48 MSA | 2 MA | 0,5 TBPB | 16 |
| 5 | 90 As | 8 MSA | 2 VAc | 0,5 TBPO | 32 |
| 6 | 50 As | 48 MSA | 2 Vi4 | 0,5 TBPO | 18 |
| 7 | 70 As | 28 MSA | 2 MA | 0,5 TBPB | 33 |

As   =   Acrylsäure
MSA   =   Maleinsäureanhydrid
BA   =   n.Butylacrylat
MA   =   Methylacrylat
VAc   =   Vinylacetat
Vi4   =   Vinylisobutylether
TBPB   =   tert.-Butylperbenzoat
TBPO   =   tert.-Butylperoctoat

## Vergleichsversuch

Polyacrylsäure wurde nach den bekannten Verfahren durch Polymerisation in 35gew.-%iger wäßriger Lösung bei 100°C in Gegenwart von Wasserstoffperoxid — 0,5 Gew.-% bezogen auf monomere Acrylsäure — hergestellt. Der K-Wert, gemessen an einer 1%igen Lösung in $H_2O$, betrug 40. Mit dieser Polyacrylsäure wurde die in Tabelle 2 und 3 festgehaltenen Aschegehalte bestimmt.

Die Prüfung der anspruchsgemäßen Verbindungen als Inkrustierungsinhibitoren in Waschmitteln wird wie folgt durchgeführt:

Gewebestücke (je 10 g Baumwollnessel Nr. 222 und Baumwollfrottee) werden im Launder-O-meter der Fa. Atlas 20mal gewaschen. Die Wasserhärte beträgt 22° d, Flottenverhältnis 1 : 12,5. Waschmittelkonzentration 8 g/l. Zur Verwendung gelangt ein phosphatreduziertes Waschmittel und gegebenenfalls jeweils 2% der zu prüfenden Substanz, bezogen auf die eingesetzte Waschmittelmenge. Im vorliegenden Fall wurde ein Waschmittel benutzt, dessen Buildergerüst 3% Soda, 7,5% Na-Silikat und 19% Phosphate, davon 11% Natriumtripolyphosphat und 7% Natriumorthophosphat enthielt. Das Waschmittel entspricht daher bereits der 2. Stufe der Phosphathöchstmengenverordnung zum deutschen Waschmittelgesetz.

Nach den 20 Wäschen werden die Gewebestücke verascht und die Inkrustierung in % des ursprünglichen Gewebegewichts angegeben.

Die Tabelle 2 zeigt die erhaltenen Aschewerte im Vergleich zu denen, die mit einem handelsüblichen Inkrustierungsinhibitor sowie ohne Inhibitor erhalten wurden bei Bedingungen der sog. Kochwäsche (45 min bei 40—95°C).

Tabelle 3 zeigt die Inkrustationen, die bei Verwendung anspruchsgemäßer Verbindungen bei der 60°-Wäsche (45 min bei 40—60°C) erhalten werden, ebenfalls im Vergleich mit handelsüblichem Inhibitor und ohne Inhibitor.

In allen Fällen ist ersichtlich, daß die erfindungsgemäßen Verbindungen den Aschegehalt der Gewebe nach 20 Wäschen stärker oder mindestens gleich gut reduzieren wie der handelsübliche Inkrustationsinhibitor.

**0 076 992**

Tabelle 2

| Beispiel/ Vergleichsbeispiel | % Asche Baumwolle 222 | Frottee |
|---|---|---|
| 1 | 2,5 | 4,6 |
| 2 | 2,5 | 4,4 |
| 3 | 2,4 | 4,7 |
| 4 | 2,6 | 4,6 |
| 5 | 2,7 | 4,5 |
| 6 | 2,5 | 4,4 |
| 7 | 2,5 | 4,4 |
| Vergleichsbeispiel | 3,2 | 4,8 |
| Ohne Inkrustierungs- inhibitor gewaschen | 4,1 | 8,4 |

Tabelle 3

| Beispiel | % Asche Baumwolle 222 | Frottee |
|---|---|---|
| 1 | 1,6 | 3,6 |
| 3 | 1,6 | 3,7 |
| 4 | 1,5 | 3,5 |
| 7 | 1,6 | 3,4 |
| Vergleichsbeispiel | 2,3 | 4,1 |
| Ohne Inkrustierungs- inhibitor gewaschen | 2,8 | 6,7 |

**Patentansprüche**

1. Verfahren zur Herstellung polymerer organischer Säuren durch Copolymerisation von monoolefinisch ungesättigten monofunktionellen Säuren, damit copolymerisierbaren monoolefinisch ungesättigten Monomeren ohne Säurefunktion und gegebenenfalls mit den vorhergehenden Monomeren copolymerisierbare monoolefinisch ungesättigten Dicarbonsäuren und/oder deren Anhydride in Gegenwart von radikalbildenden Initiatoren bei erhöhten Temperaturen und Drücken, dadurch gekennzeichnet, daß man in kontinuierlicher Fahrweise und im Rahmen einer Substanzpolymerisation — jeweils bezogen auf die Summe der Monomeren —

a) 50 bis 95 Gew.-% mindestens einer der ungesättigten monofunktionellen Säuren mit 3 bis 10 C-Atomen,
b) 0,5 bis 5 Gew.-% mindestens einer der mit a) copolymerisierbaren Monomeren ohne Säurefunktion und
c) 0 bis 49 Gew.-% mindestens einer der ungesättigten Dicarbonsäuren oder ihrer Anhydride mit 4 bis 6 C-Atomen

mit der Maßgabe, daß die Prozentzahlen von a, b und c zusammen 100 ergeben, in Gegenwart von — bezogen auf die Summe von a, b und c — 0,1 bis 5 Gew.-% des radikalbildenden Initiators bei 200 bis

6

400°C copolymerisiert und gegebenenfalls die erhaltenen Copolymerisate vollständig oder teilweise neutralisiert.

2. Verfahren nach Anspruch 1, dadurch gekennzeichnet, daß die Komponente a) zu 60 bis 85 Gew.-%, die Komponente b) zu 1 bis 5 Gew.-% und die Komponente c) zu 10 bis 40 Gew.-% im Polymerisationsansatz anwesend sind.

3. Verfahren nach Anspruch 1 oder 2, dadurch gekennzeichnet, daß als Komponente a) Acrylsäure und/oder Methacrylsäure, als Komponente b) Vinylacetat, n-Butylacrylat, 2-Ethylhexylacrylat, Hydroxypropylacrylat, Styrol, N-Vinylpyrrolidon und/oder Vinylisobutylether und als Komponente c) Maleinsäureanhydrid zum Einsatz gelangen.

4. Polymere organische Säuren bzw. ihre vollständigen oder teilweisen Neutralisationsprodukte, hergestellt nach dem Verfahren gemäß Ansprüchen 1 bis 3, mit K-Werten, bestimmt nach DIN 53 726 in 2%iger Lösung in Dimethylformamid, von 18 bis 33.

5. Verwendung von Polymeren gemäß Anspruch 4 als Gerüststoffsubstanzen und Inkrustationsinhibitoren in Wasch- und Reinigungsmitteln.

## Claims

1. A process for the preparation of polymeric organic acids by copolymerizing monoolefinically unsaturated monofunctional acids and monoolefinically unsaturated monomers, copolymerizable therewith and devoid of acid groups, with or without monoolefinically unsaturated dicarboxylic acids and/or anhydrides which are copolymerizable with the preceding monomers, in the presence of a free radical initiator at elevated temperatures and superatmospheric pressures, wherein the copolymerization is carried out as a continuous mass polymerization using, based on the sum of the monomers,

a) from 50 to 95% by weight of one or more of the unsaturated monofunctional acids of 3 to 10 carbon atoms,

b) from 0.5 to 5% by weight of one or more of the monomers copolymerizable with a) and devoid of acid groups, and

c) from 0 to 49% by weight of one or more of the unsaturated dicarboxylic acids or their anhydrides of 4 to 6 carbon atoms,

with the proviso that the percentages of a, b and c add up to 100, in the presence of 0.1 to 5% by weight, based on the sum of a, b and c, of the free radical initiator, at from 200 to 400°C, and the copolymers obtained may, if desired, be completely or partially neutralized.

2. A process as claimed in claim 1, wherein the polymerization batch contains from 60 to 85% by weight of component a), from 1 to 5% by weight of component b) and from 10 to 40% by weight of component c).

3. A process as claimed in claim 1 or 2, wherein component a) is acrylic acid and/or methacrylic acid, component b) is vinyl acetate, n-butyl acrylate, 2-ethylhexyl acrylate, hydroxypropyl acrylate, styrene, N-vinylpyrrolidone and/or vinyl isobutyl ether, and component c) is maleic anhydride.

4. A polymeric organic acid, as such or in its completely or partially neutralized form, prepared by a process as claimed in claims 1 to 3 and having a K value of from 18 to 33, determined in 2% strenght dimethylformamide solution according to DIN 53 726.

5. The use of a polymer as claimed in claim 4 as builder and scale inhibitor in detergents and cleansers.

## Revendications

1. Procédé de préparation de polymères d'acides organiques par copolymérisation de monomères sans fonction acide, à insaturation monooléfinique, copolymérisables avec des acides monofonctionnels à insaturation monooléfinique, et éventuellement des acides dicarboxyliques à insaturation monooléfinique, ou leurs anhydrides, copolymérisables avec les précédents monomères, en présence d'initiateurs formant des radicaux, à températures et pressions élevées, caractérisé par le fait qu'on copolymérise, en processus continu et dans le cadre d'une polymérisation dans la masse — et rapportés chacun à la somme des monomères —:

a) 50 à 95% d'au moins un des acides monofonctionnels, insaturés, à 3 à 10 atomes C,

b) 0,5 à 5% en poids d'au moins un des monomères sans fonction acide, copolymérisables avec a)

c) 0 à 49% en poids d'au moins un des acides dicarboxyliques insaturés, ou leurs anhydrides, à 4 à 6 atomes C

sous réserve que la somme des pourcentages a, b et c, donne 100, en présence de 0,1 à 5% en poids — rapporté à la somme de a, b et c — de l'initiateur formant des radicaux, et, éventuellement, on neutralise, totalement ou partiellement, les copolymérisats obtenus.

2. Procédé selon la revendication 1, caractérisé par le fait que les composants a) sont présents dans l'ensemble de polymérisation, à raison de 60 à 85% en poids, les composants b) à raison de 1 à 5% en poids et les composants c) à raison de 10 à 40% en poids.

3. Procédé selon la revendication 1 ou 2, caractérisé par le fait que, comme composants a), on introduit de l'acide acrylique et/ou méthacrylique, comme composants b), de l'acétate de vinyle, de l'acrylate de n-butyle, de l'acrylate de 2-éthylhexyle, de l'acrylate d'hydroxypropyle, du styrène, de la N-vinylpyrolidone et/ou vinylisobutyléther et, comme composants c), de l'anhydride d'acide maléique.

4. Polymères d'acides organiques ou leurs produits de neutralisation totale ou partielle, préparés par le procédé selon les revendications 1 à 3, et d'un indice K de 18 à 33, déterminé selon DIN 53 276 dans une solution, à 2%, dans du diméthylformamide.

5. Utilisation de polymères selon la revendication 4 comme substances de structure et inhibiteurs d'incrustations dans des détergents et produits de nettoyage.